# FASCICULE DE BREVET EUROPEEN

(11) **EP 4 042 128 B1**
(45) Date de publication et mention de la délivrance du brevet: **26.03.2025**
(21) Numéro de dépôt: 20781598.6
(22) Date de dépôt: 07.10.2020
(51) Int. Cl.: G01M 7/00, G01M 17/007, G01M 3/24

(54) **PROCÉDÉ DE CONTRÔLE DE L'ÉTANCHÉITÉ D'UN PANNEAU DE VÉHICULE AUTOMOBILE À DOUBLE PAROI PAR DÉTECTION D'ULTRASONS**
VERFAHREN ZUR DICHTHEITSPRÜFUNG EINER DOPPELWANDIGEN KRAFTFAHRZEUGPLATTE MITTELS ULTRASCHALLSENSOREN
METHOD FOR CHECKING THE TIGHTNESS OF A DOUBLE-WALLED MOTOR VEHICLE PANEL VIA ULTRASOUND SENSING

(30) Priorité: 07.10.2019 FR 1911107; 18.12.2019 FR 1914789
(43) Date de publication de la demande: 17.08.2022
(73) Titulaire: OPmobility SE, 69007 Lyon (FR)
(72) Inventeur: VIRELIZIER, François, 01150 SAINTE-JULIE (FR); BRIZIN, Jérôme, 01150 SAINTE-JULIE (FR); STUMPP, Eric, 01150 SAINTE-JULIE (FR); TRESSE, David, 01150 SAINTE-JULIE (FR); GUYOT, Julien, 01150 SAINTE-JULIE (FR)
(74) Mandataire: LLR
(86) Numéro de dépôt international: PCT/EP2020/078134
(87) Numéro de publication internationale: WO 2021/069500

(56) Documents cités:
- EP-A2- 1 450 150
- EP-A2- 1 988 379
- WO-A1-2008/152667
- WO-A2-2007/068941
- CN-A- 105 738 046
- DE-A1- 102007 046 463
- DE-B1- 2 823 976
- US-A- 4 719 801

## Description

L'invention concerne le domaine général du contrôle de l'étanchéité d'un assemblage collé de pièces de véhicule automobile.

Plus particulièrement, elle concerne un dispositif de contrôle de l'étanchéité d'un panneau de carrosserie de véhicule automobile constitué de deux parois en plastique collées entre elles. Un tel panneau peut être un ouvrant arrière (hayon) ou latéral (porte), avant (capot) ou un becquet aérodynamique.

À l'heure actuelle, par exemple, les hayons de véhicule automobile comprennent le plus souvent un caisson, formant la paroi interne du panneau, composé d'une partie inférieure, d'une partie supérieure, ainsi qu'une ou plusieurs peaux de carrosserie venant recouvrant les parties du caisson, qui forment la paroi externe du panneau. L'ensemble composé du caisson et de la ou des peaux de carrosserie est appelée panneau de hayon.

De façon générale, ladite au moins une peau de carrosserie est rapportée par collage sur la partie du caisson concernée : la peau et la partie du caisson comprennent à cet effet chacun une piste de collage continue en regard l'une de l'autre. La présence de la colle permet non seulement d'assembler la peau de carrosserie à la partie du caisson, mais forme également un joint d'étanchéité entre ces deux éléments, et donc du panneau.

Une fois la peau de carrosserie rapportée et collée sur la partie du caisson, il est nécessaire de contrôler l'étanchéité d'un tel assemblage, et donc l'intégrité du joint d'étanchéité formé par le joint de colle. On entend ici par intégrité la capacité du joint d'étanchéité à assurer sa fonction d'étanchéité. Une baisse d'intégrité, ou défaut d'étanchéité, peut avoir différentes causes, telles qu'un joint endommagé ou mal positionné sur la piste de collage, un mauvais positionnement de la peau sur la partie du caisson, un plaquage insuffisant de la peau sur la partie du caisson, etc.

Pour contrôler l'intégrité du joint d'étanchéité formé par le joint de colle, on procède en général à une mise sous pression d'air de l'assemblage sous une cloche de bridage suivie d'une détection d'un éventuel différentiel de pression entre d'une part, le volume situé entre la partie du caisson et la peau de carrosserie ainsi assemblés et, d'autre part, l'extérieur de la structure. Un tel différentiel signale un défaut d'étanchéité, ou perte d'intégrité, du joint d'étanchéité formé par le joint de colle. Pour localiser le défaut, il est de plus possible d'appliquer le long du joint de colle un produit révélateur de fuite d'air.

Le document WO2008/152667 A1 décrit une méthode et un dispositif pour détecter des bruits sonores à l'intérieur d'un véhicule générés par par des émissions d'un jet d'air autour du véhicule pour vérifier l'intégrité des joints du véhicule. Les documents EP1988379 A2, DE102007046463 A1 et EP1450150 A2 décrivent des dispositifs similaires. Le document WO2007/068941 décrit un dispositif pour contrôler l'intégrité d'un joint de colle entre une carrosserie et un pare-brise d'un véhicule en utilisant un émetteur d'ultrason placé à l'intérieur du véhicule et un détecteur à l'extérieur du véhicule.

L'équipement de contrôle évoqué ci-avant présente de nombreux inconvénients.

En premier lieu, il est particulièrement imposant en termes de poids et de volume du fait de son fonctionnement sous pression d'air.

En outre, sa mise en place ainsi que son utilisation est longue et difficile pour un opérateur, ce qui la rend donc coûteuse et incompatible avec un contrôle de production plus systématique que par prélèvement statistique, à plus forte raison avec un contrôle unitaire (à 100%).

Enfin, du fait de la nécessité de provoquer une surpression à l'intérieur de la pièce assemblée, les efforts appliqués par la cloche de bridage sont particulièrement importants, ce qui endommage la pièce et la rend alors inutilisable sur véhicule. Les efforts de bridage ont en effet eux aussi pour conséquence d'abîmer le moyen de contrôle lui-même, notamment au niveau des joints d'étanchéité de la cloche.

L'invention a notamment pour but de procurer un procédé de contrôle de l'étanchéité d'un panneau de véhicule automobile à double paroi collées, tel que le hayon précité, qui soit moins encombrant, plus rapide et plus facile d'utilisation, ne l'endommage pas, tout en étant fiable.

À cet effet l'invention concerne un procédé de contrôle de l'intégrité d'un joint de colle à contrôler reliant une partie d'un caisson de carrosserie et une peau de carrosserie, définissant entre eux un volume intérieur à contrôler,
**caractérisé en ce qu'il** comprend les étapes suivantes, effectuées dans cet ordre:
- disposition d'au moins un dispositif de détection d'ultrasons dans le volume intérieur ;
- émission d'un jet d'air directionnel sous pression en regard d'une zone prédéterminée du joint de colle ;
- enregistrement d'un niveau de bruit détecté par le dispositif de détection d'ultrasons dans le volume intérieur ; et
- détermination d'un défaut d'intégrité dans le joint de colle selon le niveau de bruit enregistré.

L'invention permet donc, à l'aide de moyens simples et peu encombrants, tels qu'une buse de jet d'air et des microphones par exemple, de détecter une baisse d'intégrité dans le joint de colle en relevant le niveau de bruit dans le volume intérieur émis par l'air issu du jet directionnel ayant traversé le défaut dans le joint de colle. En effet, si le niveau de bruit enregistré dans le volume intérieur du fait de l'application du jet d'air en regard d'une zone prédéterminée du joint de colle est suffisamment important, il signale un défaut dans cette zone du joint de colle.

Le procédé proposé par l'invention est à la fois plus simple et implique un matériel moins encombrant et plus facile d'utilisation que la mise sous pression de l'assemblage suivie d'une détection d'un éventuel différentiel de pression entre d'une part, le volume situé entre la partie du caisson et la peau de carrosserie ainsi assemblés et, d'autre part, l'extérieur de la structure. La détection d'un niveau de bruit est également plus fiable que l'utilisation d'un produit révélateur de fuite d'air, et peut également être facilement automatisée. Le matériel nécessaire pour mettre en œuvre le procédé de contrôle selon l'invention est sans contact direct avec la pièce et n'implique alors aucun endommagement de l'assemblage à contrôler.

Par ailleurs, il a été découvert que le niveau de bruit détecté à l'intérieur du volume intérieur de l'assemblage était plus important du fait de l'émission d'un jet d'air directionnel sous pression en regard d'un défaut du joint de colle, plutôt que du fait de la simple émission d'ultrasons par un émetteur d'ultrasons qui serait situé en regard d'un tel défaut.

En effet, le passage forcé de l'air issu du jet à travers le défaut de collage, en général un orifice de faibles dimensions, produit des ultrasons de forte amplitude à la manière d'un sifflet, sous l'effet mécanique de la pression du jet. En outre, l'application du jet permet de détecter certains orifices de faibles dimensions dans le joint de colle qui, partiellement ou totalement refermés par la pression d'assemblage exercée par le reste du joint, n'auraient pas été traversés par des ultrasons émis par un simple émetteur d'ultrasons En effet, la pression du jet permet d'ouvrir ces orifices et ainsi de les révéler.

Ainsi, le procédé selon l'invention permet de relever des différences de niveaux de bruit accentués et de grande amplitude entre une zone du joint de colle sans défaut et une zone du joint de colle avec défaut, rendant le procédé de détection d'autant plus fiable.

De préférence, le procédé de contrôle comprend en outre une étape de comparaison du niveau de bruit enregistré avec un niveau de bruit de référence ; et dans lequel on déterminer un défaut d'intégrité dans le joint de colle si le niveau de bruit enregistré est différent du niveau de bruit de référence.

En effet, compte tenu des formes complexes que peuvent prendre les ensembles de partie de caisson et de peau de carrosserie une fois assemblés et des effets de réverbération ainsi créés au sein du volume intérieur de l'assemblage, les niveaux de bruit qui y sont enregistrés, même en l'absence de défaut, diffèrent notablement selon les zones du joint de colle à contrôler. Il est donc préférable de comparer le niveau de bruit enregistré sur une pièce à contrôler avec un niveau de bruit de référence correspondant à une pièce conforme ou une moyenne effectuée sur un lot de pièces conforme.

Avantageusement, avant l'étape de disposition d'au moins un dispositif de détection d'ultrasons dans le volume intérieur, on effectue les étapes suivantes :
- disposition d'au moins un dispositif de détection d'ultrasons dans le volume intérieur, dit volume de référence, défini par une partie de caisson de carrosserie et une peau de carrosserie reliés par un joint de colle ne comprenant pas de défaut d'étanchéité, dit joint de colle de référence ;
- émission d'un jet d'air directionnel sous pression en regard d'une zone prédéterminée du joint de colle de référence ;
- détection du niveau de bruit dans le volume intérieur de référence ; et
- enregistrement du niveau de bruit ainsi détecté.

Ceci permet d'effectuer une comparaison des niveaux de bruits entre un ensemble de partie de caisson de carrosserie et de peau de carrosserie reliés par un joint de colle à contrôler avec un ensemble identique, dit de référence, dont on sait qu'il ne présente pas de défaut, ou une moyenne effectuée sur un lot de pièces conforme.

De préférence, la zone prédéterminée du joint de colle de référence correspond à une même zone prédéterminée du joint de colle à contrôler.

En effet, étant donné que les niveaux de bruit enregistrés dans le volume intérieur de l'assemblage varient d'une zone à l'autre du joint de colle, il est préférable de comparer deux à deux les niveaux de bruits enregistrés pour des mêmes zones prédéterminées du joint de colle de référence et du joint de colle à contrôler.

Afin de contrôler plusieurs zones du joint de colle, les étapes d'émission et d'enregistrement sont effectuées pour une pluralité de zones prédéterminées du joint de colle.

De préférence, afin de contrôler l'ensemble du joint de colle, les zones prédéterminées sont uniformément réparties le long du joint de colle.

De préférence, afin de contrôler de façon plus précise l'ensemble du joint de colle, les zones prédéterminées sont contiguës et la réunion des zones prédéterminées inclut sensiblement tout le périmètre du joint de colle.

Afin de favoriser les émissions de bruit dans le volume intérieur et ainsi améliorer sa détection dans le volume intérieur de l'assemblage, l'émission du jet d'air se fait au droit du joint de colle.

Afin d'améliorer encore davantage la détection du bruit, l'émission du jet d'air se fait à proximité immédiate du joint de colle, de préférence à une distance comprise entre 5 et 50mm du joint de colle.

Dans le cas où la peau de carrosserie et/ou la partie de caisson de carrosserie comportent des orifices, on réalise une étape préalable d'isolation des orifices par rapport au milieu extérieur.

En effet, la peau de carrosserie et/ou la partie de caisson de carrosserie comportent en général au moins un, voire plusieurs orifices traversants. Dans le cas d'une peau de carrosserie recouvrant une partie inférieure d'un caisson de hayon, les orifices correspondent notamment à l'implantation d'un éclaireur de plaque de police, d'une commande d'ouverture du hayon ou d'un logement de feu de signalisation pour un hayon, et dans le cas d'une partie d'un caisson, à l'implantation d'un troisième feu stop pour un becquet, etc. L'étape d'isolation permet de ne détecter que les éventuelles fuites dues à un défaut d'étanchéité localisé au niveau du seul joint de colle, et non l'évacuation naturelle de l'air par ces orifices.

De préférence, le dispositif de détection d'ultrasons peut détecter des ondes sonores dont la fréquence est comprise entre 5kHz et 50kHz.

Compte tenu des formes complexes que peuvent prendre les ensembles de partie de caisson et de peau de carrosserie une fois assemblés et des effets de réverbération constatés, le bruit au sein du volume intérieur est plus ou moins perturbé et des niveaux de bruits différents sont détectés selon les zones du joint de colle. Il est donc avantageux que le dispositif de détection d'ultrasons puisse détecter des ondes sur une plage de niveaux de bruit suffisamment étendue.

L'invention concerne également un dispositif de contrôle de l'intégrité d'un joint de colle à contrôler reliant une partie de caisson de carrosserie et une peau de carrosserie, définissant entre eux un volume intérieur, comprenant :
- au moins un dispositif de détection d'ultrasons destiné à être disposé dans le volume intérieur ;
- un dispositif d'émission d'un jet d'air directionnel sous pression en regard d'une zone prédéterminée du joint de colle ;
- un dispositif d'enregistrement d'un niveau de bruit détecté par le dispositif de détection d'ultrasons dans le volume intérieur.

De préférence, le dispositif de contrôle comprend en outre :
- un dispositif de comparaison du niveau de bruit enregistré avec un niveau de bruit de référence ; et
- un dispositif de détermination d'un défaut d'intégrité dans le joint de colle si le niveau de bruit enregistré est différent du niveau de bruit de référence.

Dans le cas où la peau de carrosserie ou la partie du caisson est pourvue d'au moins un orifice traversant, dit orifice de peau ou, respectivement, orifice de caisson, au moins un couvercle à dépression destiné à recouvrir ledit au moins un orifice de peau ou, respectivement, ledit au moins un orifice de caisson, délimité par deux surfaces libres opposées, dites surface interne de couvercle et surface externe de couvercle la surface interne de couvercle étant munie de deux joints d'étanchéité à contour fermé, dits respectivement joints de couvercle intérieur et extérieur, le contour du joint de couvercle intérieur étant contenu dans celui du joint de couvercle extérieur, le couvercle étant traversé par au moins un conduit d'aspiration du couvercle débouchant, d'une part, entre les deux joints de couvercle du côté de la surface interne de couvercle et, d'autre part, du côté de la surface externe de couvercle.

De tels couvercles à dépression sont décrits dans la demande de brevet français déposée sous le numéro 1911107, du même demandeur. Les couvercles à dépression permettent d'obturer les orifices de la peau et/ou de la partie du caisson durant le procédé de contrôle de l'étanchéité, pour ne détecter que les éventuelles fuites dues à un défaut d'étanchéité localisé au niveau du seul joint de colle, et non l'évacuation naturelle de l'air par ces orifices.

Avantageusement, le dispositif de contrôle comprend en outre un dispositif d'aspiration d'air relié au conduit d'aspiration du couvercle.

### Brève description des figures

L'invention sera mieux comprise à la lecture de la description qui va suivre donnée uniquement à titre d'exemple et faite en se référant aux dessins annexés dans lesquels :
[fig.1] La figure 1 est une vue en perspective d'un hayon de véhicule automobile en cours d'assemblage ;
[fig.2] La figure 2 est une vue en perspective éclatée du hayon de la figure 1 ;
[fig.3] La figure 2 est une vue schématique d'un becquet et d'une traverse supérieure reliés par un joint de colle et d'un dispositif de contrôle de l'intégrité du joint de colle selon l'invention ;
[fig.4] La figure 4 est une vue schématique d'un dispositif d'émission d'un jet d'air du dispositif de contrôle de la figure 3 et d'une coupe d'un becquet et d'une traverse supérieure reliés par un joint de colle.

### Description détaillée

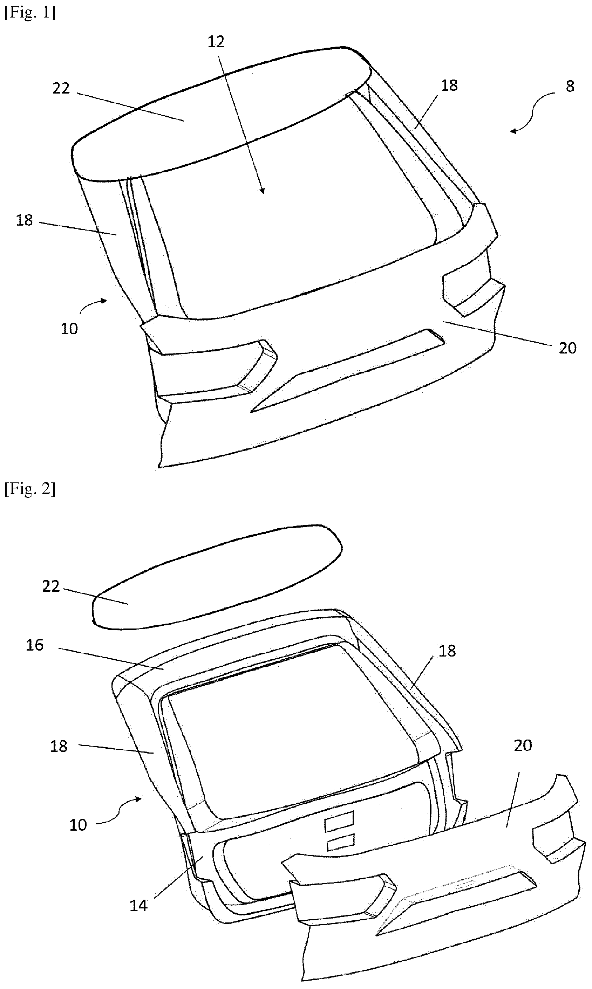

On a représenté sur les figures 1 et 2 un panneau de carrosserie de véhicule automobile 8 connu en soi de l'art antérieur, qui est en l'occurrence un panneau de hayon de véhicule automobile.

Le panneau de hayon 8 comprend un caisson 10 qui comprend une ouverture 12 du caisson pour accueillir une lunette (non représentée sur les figures) destinée à être rapportée sur le caisson 10 par collage.

Plus précisément, le caisson 10 comprend une partie inférieure 14 située en-dessous de l'ouverture de lunette 12, reliée à une traverse supérieure 16 par deux montants latéraux 18 de la lunette.

Le caisson 10 est destiné à être recouvert par une ou plusieurs peaux de carrosserie pour former le panneau de carrosserie. Comme on peut le voir à la figure 2, la partie inférieure du caisson 14 du hayon est ici recouverte d'une peau de carrosserie inférieure 20 rapporté sur le caisson 10 par collage et la traverse supérieure 16 par une autre peau de carrosserie, communément appelée becquet 22.

La peau de carrosserie inférieure 20 et le becquet 22 sont respectivement assemblés sur la partie inférieure du caisson 14 et la traverse supérieure 16 par des cordons de colle 24 continus disposés, là aussi de façon connue, sur des pistes de collage continue respectivement situées sur le pourtour de la partie inférieure du caisson 20 et de la traverse supérieure. Les cordons de colle 24 constituent ici un joint de colle entre la peau de carrosserie inférieure 20 et la partie inférieure du caisson 14 d'une part, et le becquet 22 sur la traverse supérieure 16 d'autre part. De la sorte, la pièce de carrosserie et la peau de carrosserie définissent entre eux un volume intérieur V.

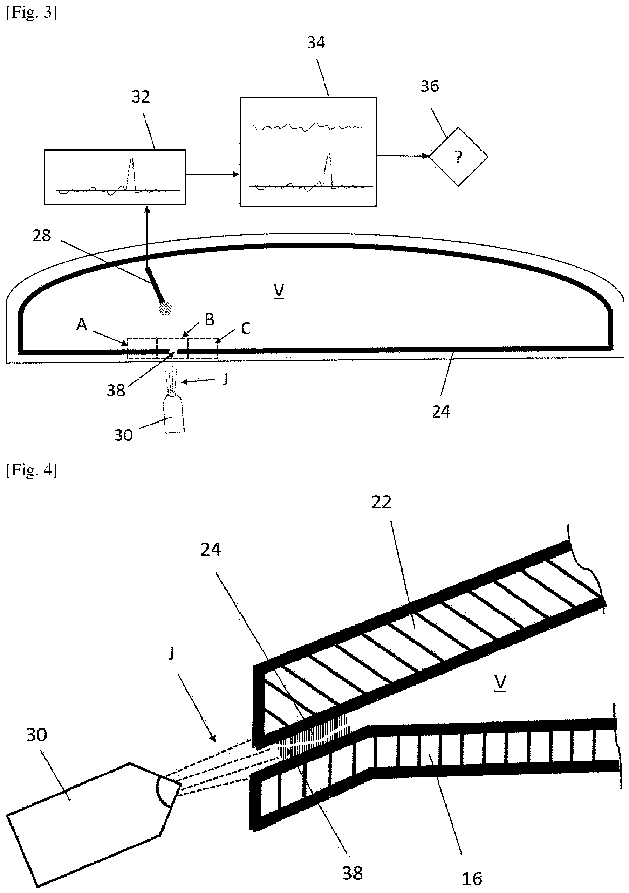

Pour contrôler l'intégrité du joint d'étanchéité constitué par le cordon de colle 24, on utilise un dispositif de contrôle 26 de l'intégrité d'un joint de colle, représenté de façon schématique à la figure 3. Dans ce qui suit, le joint de colle 24 que l'on contrôle est celui disposé entre le becquet 22 sur la traverse supérieure 16. Ce joint de colle 24 est représenté de façon schématique à la figure 3. On notera toutefois que tout ce qui suit est prévu pour et s'applique tout aussi bien au joint de colle 24 reliant la partie inférieure du caisson 14 et la peau de carrosserie inférieure 20.

Le dispositif de contrôle 26 comprend un dispositif de détection d'ultrasons 28 disposé dans le volume intérieur V. Par exemple, il s'agit d'un microphone 28 apte à détecter les ultrasons. Sur la figure 3, seul un microphone 28 est représenté, mais on peut bien entendu en disposer davantage dans le volume intérieur V si besoin. Le dispositif de détection d'ultrasons peut détecter des ondes sonores dont la fréquence est comprise entre 5kHz et 50kHz.

Le dispositif de contrôle 26 comprend également un dispositif d'émission 30 d'un jet d'air directionnel J sous pression. Il s'agit par exemple d'une buse reliée à un dispositif de compression d'air ou tout autre dispositif permettant l'émission d'un jet d'air directionnel J sous pression. Pour des raisons de clarté, seule la buse 30 d'émission d'un jet d'air a été représentée aux figures 3 et 4.

La buse 30 est apte à émettre un jet d'air directionnel sous pression en regard d'une zone prédéterminée du joint de colle 24. Pour ce faire, la buse 30 peut être tenue en main par un opérateur, ou par un bras articulé d'un robot (non représenté).

Le dispositif de contrôle26 comporte également un dispositif d'enregistrement 32 d'un niveau de bruit détecté par le dispositif de détection d'ultrasons (microphone 28) dans le volume intérieur.

Le dispositif de contrôle 26comporte également un dispositif de comparaison 34 du niveau de bruit enregistré avec un niveau de bruit de référence et un dispositif de détermination 36 d'un défaut d'intégrité 38 dans le joint de colle 24 si le niveau de bruit enregistré est différent du niveau de bruit de référence. Le défaut d'intégrité 38 est ici sur les figures un orifice traversant dans le joint de colle 24.

On va maintenant décrire le procédé de contrôle de l'intégrité d'un joint de colle 24 à contrôler à l'aide du dispositif de contrôle 26.

Dans un premier temps, on dispose au moins un dispositif de détection d'ultrasons, ici un ou plusieurs microphones 28, dans le volume intérieur d'un assemblage formé par une traverse supérieure et un becquet reliés par un joint de colle ne comprenant pas de défaut d'étanchéité.

Si la peau de carrosserie et/ou la partie du caisson de carrosserie concernés comportent des orifices, on réalise une étape préalable d'isolation de ces orifices par rapport au milieu extérieur. Cette étape est réalisée indifféremment avant ou après la disposition des microphones 28.

Dans ce qui suit, on appellera ce joint de colle sans défaut « joint de référence », et l'assemblage dont le joint de colle est un joint de colle de référence un « assemblage de référence ». L'assemblage de référence est un assemblage de pièces identiques à celles que l'on souhaite tester, qui peut notamment être issu de la même ligne de fabrication. Il s'agit donc ici d'un assemblage d'un becquet 22 sur une traverse supérieure 16 dont le joint de colle ne présente pas de défaut.

On notera également que, dans la mesure où étapes qui suivent sont les mêmes pour un joint de référence ou un joint de colle 24 que l'on souhaite tester, on fait référence aux figures 3 et 4, et ce bien que le joint de colle 24 présente un défaut 38. En effet, la seule différence entre le joint de colle 24 à contrôler et le joint de référence est ici l'absence de défaut 38.

Une fois le dispositif de détection 28 mis en place dans le volume de référence V de l'assemblage de référence, on émet un jet d'air J directionnel sous pression en regard d'une zone prédéterminée du joint de colle de référence.

Afin de favoriser les émissions de bruit dans le volume intérieur V et ainsi améliorer sa détection dans le volume intérieur V, l'émission du jet d'air J se fait au droit du joint de colle 24, comme on peut le voir à la figure 4.

Afin d'améliorer encore davantage la détection du bruit, l'émission du jet d'air J se fait à proximité immédiate du joint de colle 24, de préférence à une distance comprise entre 5 et 50 mm du joint de colle 24.

Puis, on détecte le niveau de bruit dans le volume intérieur de référence V à l'aide du ou des microphones 28, et on enregistre, à l'aide du dispositif d'enregistrement 32, le niveau de bruit ainsi enregistré, dit niveau de bruit de référence.

Les étapes d'émission et d'enregistrement décrites ci-dessous sont effectuées pour une pluralité de zones prédéterminées du joint de colle de référence. On a représenté à la figure 3 trois zones prédéterminées A, B et C qui sont de préférence contiguës, comme sur la figure 3.

Ces zones prédéterminées sont de préférences uniformément réparties le long du joint de colle 24. De plus, de préférence, la réunion des zones prédéterminées inclut sensiblement tout le périmètre du joint de colle de référence. Néanmoins, pour des raisons de clarté seules trois de ces zones A, B, C ont été représentées sur la figure 3.

En effet, compte tenu des formes complexes que peuvent prendre les ensembles de caisson et de peau de carrosserie (ici un becquet et une traverse supérieure) une fois assemblés et des effets de réverbération ainsi créés au sein du volume intérieur de l'assemblage, les niveaux de bruit qui y sont détectés, même en l'absence de défaut, diffèrent notablement selon les zones du joint de colle de référence.

On enregistre donc une valeur de bruit de référence pour chacune des zones prédéterminées. On obtient ainsi une cartographie sonore du joint de colle de référence, c'est-à-dire un ensemble de couples de valeurs associées, à savoir un niveau de bruit de référence associé à une zone prédéterminée.

On notera que dans une variante, la valeur du niveau de bruit de référence associé à une zone prédéterminée du joint de colle de référence peut être le résultat d'une moyenne de niveaux de bruit relevés pour une même zone prédéterminées de plusieurs pièces identiques conformes.

Dans encore d'autres variantes, les niveaux de bruit de référence par zone prédéterminée, autrement dit la cartographie sonore telle que définie ci-dessus pourront inclure davantage de données, dites données de référence, liées à la valeur de niveau de bruit par zone prédéterminée relevée pour un ou plusieurs joints de colle de référence. On pourra ainsi enregistrer un minimum et/ou un maximum de bruit relevé en effectuant un relevé du niveau de bruit pendant un laps de temps donné, effectuer des moyennes de niveaux de bruits, calculer un écart-type des niveaux de bruits relevés, etc. Ces données de référence seront comparées deux à deux avec les données de même nature liées au niveau de bruit relevé pour le joint de colle à contrôler.

Une fois cette cartographie obtenue, on dispose au moins un dispositif de détection d'ultrasons, ici un ou plusieurs microphones 28, dans le volume intérieur V d'un assemblage à contrôler.

Puis, on émet un jet d'air directionnel J sous pression en regard d'une zone prédéterminée du joint de colle 24. On s'assurera de préférence que les conditions d'émission du jet d'air J sont les mêmes que celles de l'émission du jet d'air J en regard du joint de colle de référence, afin d'obtenir une comparaison plus fiable des niveaux de bruits enregistrés.

En outre, toujours de préférence, la zone prédéterminée du joint de colle de référence correspond à une même zone prédéterminée du joint de colle 24 à contrôler. On émettra donc le jet d'air J directionnel en regard des même zones prédéterminées, ici représentées par les zones A, B, C sur la figure 3. A cet effet, on pourra faire parcourir la buse 30 le long du joint de colle 24 à contrôler par un opérateur.

Toutefois, de préférence, la buse 30 sera maintenue par un bras articulé d'un robot (non représenté) qui effectue un balayage du joint de colle 24 sur de sorte à émettre le jet d'air J directionnel en regarder des zones prédéterminées. De préférence, le robot effectue un tel balayage de sorte que la buse 30 soit placée à une distance fixe du joint de colle 24 durant le balayage, autrement dit que le jet d'air J directionnel soit toujours émis à une même distance du joint de colle 24 lors du balayage. Dans un mode de réalisation préféré, le balayage effectué par le robot se fera sur tout le périmètre du joint de colle 24.

On enregistre ensuite le niveau de bruit détecté par le dispositif de détection d'ultrasons 28 dans le volume intérieur V et on détermine la présence d'un défaut d'intégrité dans le joint de colle selon le niveau de bruit enregistré.

Pour cela, de préférence, on compare le niveau de bruit ainsi enregistré avec le niveau de bruit de référence enregistré pour la même zone prédéterminée. Ainsi, si l'on a par exemple enregistré le niveau de bruit relevé pour la zone A du joint de colle de référence, on compare le niveau de bruit relevé pour la même zone A du joint de colle 24 à contrôle.

Si le niveau de bruit ainsi enregistré est différent du niveau de bruit de référence, on peut déterminer qu'il y a un défaut d'intégrité 38 dans le joint de colle 24.

En reprenant l'exemple de la figure 3, les zones A et C ne présentant pas de défaut dans le joint de colle 24, on relèvera dans ces zones des niveaux de bruits identiques ou très proches que les niveaux de bruit relevés pour ces zones respectives A et C du joint de référence. En revanche, puisque la zone B inclut un défaut d'étanchéité 38, on relèvera pour la zone B un niveau de bruit différent, en pratique plus élevé, que le niveau de bruit pour la zone B du joint de colle de référence.

En effectuant ces étapes successives pour des zones prédéterminées dont la réunion inclut sensiblement tout le périmètre du joint de colle 24, on peut déterminer où se trouvent les éventuels défaut d'intégrité sur tout son périmètre et déterminer si le joint de colle 24 est conforme.

L'invention n'est pas limitée aux modes de réalisation présentés et d'autres modes de réalisation apparaîtront clairement à l'homme du métier.

Il est notamment possible d'utiliser le procédé et le dispositif de contrôle de l'intégrité d'un joint de colle pour contrôler l'étanchéité d'autres panneaux de carrosserie résultant de l'assemblage de deux panneaux par collage.

### Liste des références

8 : Panneau de carrosserie (hayon)
10 : Caisson de véhicule automobile
12 : Ouverture de lunette du hayon
14 : Partie inférieure du caisson
16 : Traverse supérieure du caisson
18 : Montants latéraux du caisson
20 : Peau de carrosserie
22 : Becquet
24 : Joint de colle
26 : Dispositif de contrôle de l'intégrité du joint de colle
28 : Dispositif de détection d'ultrasons (microphone)
30 : Dispositif d'émission d'un jet d'air directionnel sous pression (buse)
32 : Dispositif d'enregistrement d'un niveau de bruit
34 : Dispositif de comparaison du niveau de bruit
36 : Dispositif de détermination d'un défaut d'intégrité
38 : Défaut d'intégrité
J : Jet d'air
V : volume intérieur

## Revendications

1. Procédé de contrôle de l'intégrité d'un joint de colle (24) à contrôler reliant une partie d'un caisson de carrosserie (16) et une peau de carrosserie (22), définissant entre eux un volume intérieur (V) à contrôler,
**caractérisé en ce qu'il** comprend les étapes suivantes, effectuées dans cet ordre:
- disposition d'au moins un dispositif de détection (28) d'ultrasons dans le volume intérieur (V) ;
- émission d'un jet d'air (J) directionnel sous pression en regard d'une zone prédéterminée (A, B, C) du joint de colle (24) ;
- enregistrement d'un niveau de bruit détecté par le dispositif de détection (28) d'ultrasons dans le volume intérieur (V) ; et
- détermination d'un défaut d'intégrité (38) dans le joint de colle (24) selon le niveau de bruit enregistré.

2. Procédé de contrôle selon la revendication 1, comprenant en outre une étape de comparaison du niveau de bruit enregistré avec un niveau de bruit de référence ; et dans lequel on détermine un défaut d'intégrité (38) dans le joint de colle (24) si le niveau de bruit enregistré est différent du niveau de bruit de référence.

3. Procédé de contrôle selon la revendication 1 ou 2, comprenant en outre les étapes suivantes, effectuées avant l'étape de disposition d'au moins un dispositif de détection d'ultrasons (28) dans le volume intérieur (V) à contrôler :
- disposition d'au moins un dispositif de détection (28) d'ultrasons dans le volume intérieur, dit volume de référence, défini par une partie d'un caisson de carrosserie (16) et une peau de carrosserie (22) reliés par un joint de colle (24) ne comprenant pas de défaut d'étanchéité, dit joint de colle de référence ;
- émission d'un jet d'air (J) directionnel sous pression en regard d'une zone prédéterminée (A ; B, C) du joint de colle de référence ;
- détection du niveau de bruit dans le volume intérieur de référence ; et
- enregistrement du niveau de bruit ainsi détecté, dit niveau de bruit de référence.

4. Procédé de contrôle selon la revendication 3, dans lequel la zone prédéterminée du joint de colle de référence correspond à une même zone prédéterminée du joint de colle à contrôler.

5. Procédé de contrôle selon l'une quelconque des revendications précédentes, dans lequel les étapes d'émission et d'enregistrement sont effectuées pour une pluralité de zones prédéterminées (A, B, C) du joint de colle.

6. Procédé de contrôle selon la revendication 5, dans lequel les zones prédéterminées (A, B, C) sont uniformément réparties le long du joint de colle (24).

7. Procédé de contrôle selon la revendication 5 ou 6, dans lequel les zones prédéterminées (A, B, C) sont contiguës et la réunion des zones prédéterminées (A, B, C) inclut sensiblement tout le périmètre du joint de colle (24).

8. Procédé de contrôle selon l'une quelconque des revendications précédentes, dans lequel l'émission du jet d'air (J) se fait au droit du joint de colle (24).

9. Procédé de contrôle selon l'une quelconque des revendications précédentes, dans lequel l'émission du jet d'air (J) se fait à proximité immédiate du joint de colle (24), de préférence à une distance comprise entre 5 et 50 mm du joint de colle (24).

10. Procédé de contrôle selon l'une quelconque des revendications précédentes dans lequel, la peau de carrosserie (22) et/ou la partie du caisson de carrosserie (16) comportant des orifices, on réalise une étape préalable d'isolation des orifices par rapport au milieu extérieur.

11. Procédé de contrôle selon l'une quelconque des revendications précédentes, dans lequel le dispositif de détection d'ultrasons (28) peut détecter des ondes sonores dont la fréquence est comprise entre 5kHz et 50kHz.

12. Dispositif de contrôle de l'intégrité (26) d'un joint de colle (24) à contrôler reliant une partie d'un caisson de carrosserie (16) et une peau de carrosserie (22) définissant entre eux un volume intérieur (26), comprenant :
- au moins un dispositif de détection d'ultrasons (28) destiné à être disposé dans le volume intérieur (V);
- un dispositif d'émission d'un jet d'air (J) directionnel sous pression en regard d'une zone prédéterminée (A, B, C) du joint de colle (24) ;
- un dispositif d'enregistrement (32) d'un niveau de bruit détecté par le dispositif de détection d'ultrasons (28) dans le volume intérieur.

13. Dispositif de contrôle (26) selon la revendication 12, comprenant en outre :
- un dispositif de comparaison (34) du niveau de bruit enregistré avec un niveau de bruit de référence ; et
- un dispositif de détermination d'un défaut d'intégrité dans le joint de colle (24) si le niveau de bruit enregistré est différent du niveau de bruit de référence.

14. Dispositif de contrôle (26) selon la revendication 12 ou 13, comprenant en outre, la peau de carrosserie (22) ou la partie du caisson (16) étant pourvue d'au moins un orifice traversant, dit orifice de peau ou, respectivement, orifice de caisson, au moins un couvercle à dépression destiné à recouvrir ledit au moins un orifice de peau ou, respectivement, ledit au moins un orifice de caisson, délimité par deux surfaces libres opposées, dites surface interne de couvercle et surface externe de couvercle la surface interne de couvercle étant munie de deux joints d'étanchéité à contour fermé, dits respectivement joints de couvercle intérieur et extérieur, le contour du joint de couvercle intérieur étant contenu dans celui du joint de couvercle extérieur, le couvercle étant traversé par au moins un conduit d'aspiration du couvercle débouchant, d'une part, entre les deux joints de couvercle du côté de la surface interne de couvercle et, d'autre part, du côté de la surface externe de couvercle.

15. Dispositif de contrôle (26) selon la revendication 14, comprenant en outre un dispositif d'aspiration d'air relié au conduit d'aspiration du couvercle.

## Patentansprüche

1. Verfahren zum Prüfen der Integrität einer zu prüfenden Klebstoffverbindung (24), die einen Teil eines Karosseriekastens (16) und eine Karosseriehaut (22) verbindet, wobei zwischen ihnen ein zu prüfendes Innenvolumen (V) definiert wird,
**dadurch gekennzeichnet, dass** es die folgenden Schritte aufweist, die in dieser Reihenfolge ausgeführt werden:
- Anordnen mindestens einer Ultraschallerfassungsvorrichtung (28) in dem Innenvolumen (V);
- Ausstoßen eines gerichteten Luftstrahls (J) unter Druck gegenüber einem vorbestimmten Bereich (A, B, C) der Klebstoffverbindung (24);
- Aufzeichnen eines von der Ultraschallerfassungsvorrichtung (28) erfassten Geräuschpegels im Innenvolumen (V); und
- Bestimmen eines Integritätsfehlers (38) in der Klebstoffverbindung (24) gemäß dem aufgezeichneten Geräuschpegel.

2. Prüfverfahren nach Anspruch 1, das ferner einen Schritt des Vergleichens des aufgezeichneten Geräuschpegels mit einem Referenzgeräuschpegel aufweist; und bei dem ein Integritätsfehler (38) in der Klebstoffverbindung (24) bestimmt wird, wenn sich der aufgezeichnete Geräuschpegel von dem Referenzgeräuschpegel unterscheidet.

3. Prüfverfahren nach Anspruch 1 oder 2, das außerdem die folgenden Schritte aufweist, die vor dem Schritt des Anordnens mindestens einer Ultraschallerfassungsvorrichtung (28) in dem zu prüfenden Innenvolumen (V) durchgeführt werden:
- Anordnen mindestens einer Ultraschallerfassungsvorrichtung (28) in dem Innenvolumen, dem sogenannten Referenzvolumen, das durch einen Teil eines Karosseriekastens (16) und eine Karosseriehaut (22) definiert ist, die durch eine Klebstoffverbindung (24) verbunden sind, die keine Undichtigkeiten aufweist, die sogenannte Referenz-Klebstoffverbindung;
- Ausstoß eines gerichteten Luftstrahls (J) unter Druck gegenüber einem vorbestimmten Bereich (A; B, C) der Referenz-Klebstoffverbindung;
- Erfassen des Geräuschpegels im Referenzinnenvolumen; und
- Aufzeichnung des so erfassten Lärmpegels, des sogenannten Referenz-Lärmpegels.

4. Prüfverfahren nach Anspruch 3, wobei der vorbestimmte Bereich der Referenz-Klebstoffverbindung einem gleichen vorbestimmten Bereich der zu prüfenden Referenz-Klebstoffverbindung entspricht.

5. Prüfverfahren nach einem der vorhergehenden Ansprüche, wobei die Schritte des Sendens und Aufzeichnens für eine Vielzahl von vorbestimmten Bereichen (A, B, C) der Klebstoffverbindung durchgeführt werden.

6. Prüfverfahren nach Anspruch 5, bei dem die vorbestimmten Bereiche (A, B, C) gleichmäßig entlang der Klebstoffverbindung (24) verteilt sind.

7. Prüfverfahren nach Anspruch 5 oder 6, wobei die vorbestimmten Bereiche (A, B, C) aneinander angrenzen und die Vereinigung der vorbestimmten Bereiche (A, B, C) im Wesentlichen den gesamten Umfang der Klebstoffverbindung (24) einschließt.

8. Prüfverfahren nach einem der vorhergehenden Ansprüche, wobei die Emission des Luftstrahls (J) an der Klebstoffverbindung (24) erfolgt.

9. Prüfverfahren nach einem der vorhergehenden Ansprüche, bei dem die Emission des Luftstrahls (J) in unmittelbarer Nähe der Klebstoffverbindung (24) erfolgt, vorzugsweise in einem Abstand zwischen 5 und 50 mm von der Klebstoffverbindung (24).

10. Prüfverfahren nach einem der vorhergehenden Ansprüche, bei dem, da die Karosseriehaut (22) und/oder der Teil des Karosseriekastens (16) Öffnungen aufweist, ein vorheriger Schritt zur Isolierung der Öffnungen gegenüber der Außenumgebung durchgeführt wird.

11. Prüfverfahren nach einem der vorhergehenden Ansprüche, wobei die Ultraschallerfassungsvorrichtung (28) Schallwellen erfassen kann, deren Frequenz zwischen 5kHz und 50kHz liegt.

12. Vorrichtung zum Prüfen der Integrität (26) einer zu prüfenden Klebstoffverbindung (24), die einen Teil eines Karosseriekastens (16) und eine Karosseriehaut (22) verbindet, die zwischen sich ein Innenvolumen (26) definieren, mit:
- mindestens eine Ultraschallerfassungsvorrichtung (28), die dazu bestimmt ist, in dem Innenvolumen (V) angeordnet zu werden;
- eine Vorrichtung zum Ausstoßen eines gerichteten Luftstrahls (J) unter Druck gegenüber einem vorbestimmten Bereich (A, B, C) der Klebstoffverbindung (24);
- eine Vorrichtung (32) zum Aufzeichnen eines Geräuschpegels, der von der Ultraschallerfassungsvorrichtung (28) in dem Innenvolumen erfasst wird.

13. Prüfvorrichtung (26) nach Anspruch 12, ferner aufweisend:
- eine Vorrichtung (34) zum Vergleichen des aufgezeichneten Geräuschpegels mit einem Referenzgeräuschpegel; und
- eine Vorrichtung zur Bestimmung eines Integritätsfehlers in der Klebstoffverbindung (24), wenn sich der aufgezeichnete Geräuschpegel von dem Referenzgeräuschpegel unterscheidet.

14. Prüfvorrichtung (26) nach Anspruch 12 oder 13, ferner aufweisend die Karosseriehaut (22) oder den Teil des Karosseriekastens (16), die mit mindestens einer Durchgangsöffnung versehen sind, die Hautöffnung bzw. Kastenöffnung genannt wird, mindestens einen Unterdruckdeckel, der dazu bestimmt ist, die mindestens eine Hautöffnung bzw. die mindestens eine Kastenöffnung abzudecken, und der von zwei gegenüberliegenden freien Oberflächen begrenzt wird, wobei die Innenfläche des Deckels mit zwei Dichtungen mit geschlossener Kontur versehen ist, die jeweils innere und äußere Deckeldichtung genannt werden, wobei die Kontur der inneren Deckeldichtung in der Kontur der äußeren Deckeldichtung enthalten ist, wobei der Deckel von mindestens einem Ansaugkanal des Deckels durchquert wird, der einerseits zwischen den beiden Deckeldichtungen auf der Seite der Innenfläche des Deckels und andererseits auf der Seite der Außenfläche des Deckels mündet.

15. Prüfvorrichtung (26) nach Anspruch 14, ferner aufweisend eine Luftansaugvorrichtung, die mit dem Ansaugkanal des Deckels verbunden ist.

## Claims

1. Method for checking the integrity of a glue joint (24) which is to be checked and which connects one portion of a body box (16) and a body skin (22), which define an inner volume (V) to be checked therebetween, **characterized in that it** comprises the following steps, carried out in this order:
- arranging at least one ultrasound sensing device (28) in the inner volume (V);
- emitting a pressurized directional air jet (J) opposite a predetermined area (A, B, C) of the glue joint (24);
- recording a noise level detected by the ultrasound sensing device (28) in the inner volume (V); and
- determining an integrity defect (38) in the glue joint (24) according to the recorded noise level.

2. Checking method according to claim 1, further comprising a step of comparing the recorded noise level with a reference noise level; and wherein an integrity defect (38) in the glue joint (24) is determined if the recorded noise level is different from the reference noise level.

3. Checking method according to claim 1 or 2, further comprising the following steps, carried out before the step of arranging at least one ultrasound sensing device (28) in the inner volume (V) to be checked:
- arranging at least one ultrasound sensing device (28) in the inner volume, called reference volume, defined by a body box portion (16) and a body skin (22) connected by a glue joint (24) not comprising any tightness defect, called reference glue joint;
- emitting a pressurized directional air jet (J) opposite a predetermined area (A, B, C) of the reference glue joint;
- detecting the noise level in the reference inner volume; and
- recording the noise level thus detected, called reference noise level.

4. Checking method according to claim 3, wherein the predetermined area of the reference glue joint corresponds to the same predetermined area of the glue joint to be checked.

5. Checking method according to one of the preceding claims, wherein the emission and recording steps are carried out for a plurality of predetermined areas (A, B, C) of the glue joint.

6. Checking method according to claim 5, wherein the predetermined areas (A, B, C) are uniformly distributed along the glue joint (24).

7. Checking method according to claim 5 or 6, wherein the predetermined areas (A, B, C) are contiguous and the union of the predetermined areas (A, B, C) includes substantially the entire perimeter of the glue joint (24).

8. Checking method according to one of the preceding claims, wherein the emission of the air jet (J) takes place perpendicular to with the glue joint (24).

9. Checking method according to one of the preceding claims, wherein the air jet (J) is emitted in the immediate vicinity of the glue joint (24), preferably at a distance of between 5 and 50 mm from the glue joint (24).

10. Checking method according to one of the preceding claims, wherein, if the body skin (22) and/or the body box portion (16) in question contain orifices, a preliminary step is carried out for isolation of the orifices with respect to the external environment.

11. Checking method according to one of the preceding claims, wherein the ultrasound sensing device (28) is able to detect sound waves whose frequency is between 5 kHz and 50 kHz.

12. Device for checking the integrity (26) of a glue joint (24) which is to be checked and which connects one portion of a body box (16) and a body skin (22), which define an inner volume (26) therebetween, comprising:
- at least one ultrasound sensing device (28) intended to be arranged in the inner volume (V);
- a device for emitting a pressurized directional airjet (J) opposite a predetermined area (A, B, C) of the glue joint (24);
- a device (32) for recording a noise level detected by the ultrasound sensing device (28) in the inner volume.

13. Checking device (26) according to claim 12, further comprising:
- a device (34) for comparing the recorded noise level with a reference noise level; and
- a device for determining an integrity defect in the glue joint (24) if the recorded noise level is different from the reference noise level.

14. Checking device (26) according to claim 12 or 13, further comprising, the body skin (22) or the box portion (16) being provided with at least one through orifice, called the skin orifice or, respectively, box orifice, at least one vacuum cover intended to cover said at least one skin or, respectively, said at least one box orifice, delimited by two opposite free surfaces, called the inner cover surface and the outer cover surface, the inner cover surface being provided with two seals with a closed contour, respectively called inner and outer cover seals, the contour of the inner cover seal being contained within that of the outer cover seal, the cover being passed through by at least one suction port of the cover opening, on the one hand, between the two cover seals of the side of the inner cover surface and, on the other hand, on the side of the outer cover surface.

15. Checking device (26) according to claim 14, further comprising an air suction device connected to the suction port of the cover.
